# EUROPEAN PATENT APPLICATION

(11) **EP 4 333 095 A1**
(43) Date of publication of application: **06.03.2024**
(21) Application number: 22795572.1
(22) Date of filing: 12.04.2022
(51) Int. Cl.: H01M 4/13, H01M 4/139, H01M 4/66, H01M 4/74

(54) **NONAQUEOUS ELECTROLYTE SECONDARY BATTERY AND METHOD FOR PRODUCING NONAQUEOUS ELECTROLYTE SECONDARY BATTERY**

(30) Priority: 26.04.2021 JP 2021074028
(71) Applicant: Panasonic Intellectual Property Management Co., Ltd., Osaka-shi, Osaka 540-6207 (JP)
(72) Inventor: MATSUI, Tooru, Osaka 571-0057 (JP); ASAKA, Keisuke, Osaka 571-0057 (JP); SUZUKI, Hirotetsu, Osaka 571-0057 (JP); SAKATA, Motohiro, Osaka 571-0057 (JP); NAKURA, Kensuke, Osaka 571-0057 (JP)
(74) Representative: Novagraaf International SA
(86) International application number: PCT/JP2022/017595
(87) International publication number: WO 2022/230658

(57) **Abstract**

Provided is a nonaqueous electrolyte secondary battery having improved discharge characteristics. A nonaqueous electrolyte secondary battery according to one aspect of the present disclosure comprises an electrode including a current collector and a mixture layer that is formed on a surface of the current collector and that contains an active material. The current collector includes an electron conductive layer having a gap on the surface in contact with the mixture layer, and an electrolytic solution is present inside the electron conductive layer.

## Description

### TECHNICAL FIELD

The present disclosure generally relates to a non-aqueous electrolyte secondary battery and a method for manufacturing a non-aqueous electrolyte secondary battery.

### BACKGROUND ART

For a secondary battery, an electrode in which a mixture layer is formed on a surface of a current collector compose of a metal foil may be used. Patent Literature 1 discloses a negative electrode in which a network-like protrusion is provided on a surface opposite to a surface contacting with a mixture layer of a negative electrode current collector in order to reduce an effect of expansion and contraction of the negative electrode due to charge and discharge.

### CITATION LIST

### PATENT LITERATURE

PATENT LITERATURE 1: Japanese Unexamined Patent Application Publication No. 2003-297369

### SUMMARY

### TECHNICAL PROBLEM

In recent years, thickening the mixture layer has been investigated from the viewpoint of higher capacity. The present inventors have made intensive investigation, and consequently found that thickening the mixture layer is likely to prevent migration of lithium ions in the mixture layer and thus deteriorate discharge characteristics at high rate. The art disclosed in Patent Literature 1 does not consider the deterioration of the discharge characteristics due to thickening the mixture layer, and still has a room for improvement.

It is an advantage of the present disclosure to provide a non-aqueous electrolyte secondary battery with improved discharge characteristics.

### SOLUTION TO PROBLEM

A non-aqueous electrolyte secondary battery of an aspect of the present disclosure comprises an electrode having: a current collector; and a mixture layer formed on a surface of the current collector and including an active material, wherein the current collector has an electron conductive layer that has pores on a surface contacting with the mixture layer, and an electrolyte liquid is present inside the electron conductive layer.

A method for manufacturing a non-aqueous electrolyte secondary battery of an aspect of the present disclosure is a method for manufacturing the above non-aqueous electrolyte secondary battery including a step of applying a clay-like mixture slurry including the active material on the electron conductive layer, and drying and rolling the slurry to produce the electrode.

A method for manufacturing a non-aqueous electrolyte secondary battery of an aspect of the present disclosure is a method for manufacturing the above non-aqueous electrolyte secondary battery including: a step of dry-mixing raw materials including the active material, and rolling the raw materials to produce a sheet of the mixture layer; and a step of laminating the mixture layer to the electron conductive layer to produce the electrode.

### ADVANTAGEOUS EFFECT OF INVENTION

According to the non-aqueous electrolyte secondary battery of an aspect of the present disclosure, the discharge characteristics may be improved.

### BRIEF DESCRIPTION OF DRAWINGS

FIG. 1 is an axial sectional view of a cylindrical secondary battery of an example of an embodiment.
FIG. 2 is an enlarged view of a part of a cross section of an electrode of an example of an embodiment.
FIG. 3 is a graph indicating discharge curves in Examples 1 to 3 and Comparative Example.
FIG. 4 is a graph indicating discharge curves in Examples 4 to 8 and Comparative Example.
FIG. 5 is a graph indicating discharge curves in Examples 9 and 10 and Comparative Example.
FIG. 6 is a graph indicating discharge curves in Example 11 and Comparative Example.

### DESCRIPTION OF EMBODIMENTS

Hereinafter, an example of the embodiment of a non-aqueous electrolyte secondary battery according to the present disclosure will be described in detail. Hereinafter, a cylindrical battery housing a wound electrode assembly in a cylindrical exterior will be exemplified, but the electrode assembly is not limited to the wound electrode assembly, and may be a stacked electrode assembly in which a plurality of positive electrodes and a plurality of negative electrodes are alternately stacked one by one with a separator interposed therebetween. The shape of the exterior is not limited to the cylindrical shape, and may be, for example, a rectangular shape, a coin shape, or the like. The exterior may be a pouch composed of laminated sheets including a metal layer and a resin layer.

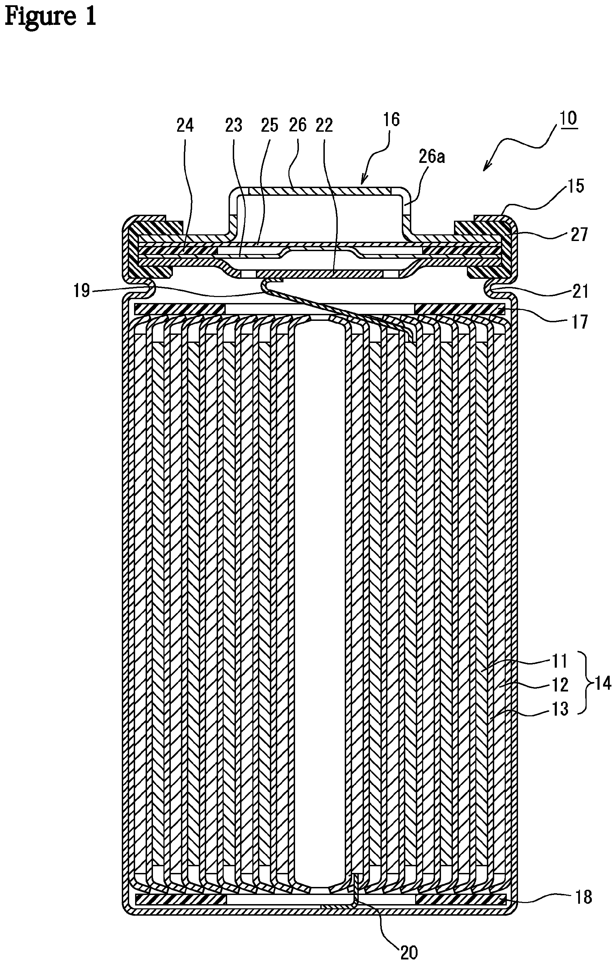

FIG. 1 is an axial sectional view of a cylindrical secondary battery 10 of an example of the embodiment. In the secondary battery 10 illustrated in FIG. 1, an electrode assembly 14 and a non-aqueous electrolyte (not illustrated) are housed in an exterior 15. The electrode assembly 14 has a wound structure in which a positive electrode 11 and a negative electrode 12 are wound with a separator 13 interposed therebetween. Hereinafter, for convenience of description, a sealing assembly 16 side will be described as the "upper side", and the bottom side of the exterior 15 will be described as the "lower side".

An opening end of the exterior 15 is capped with the sealing assembly 16 to seal an inside of the secondary battery 10. Insulating plates 17 and 18 are provided on the upper and lower sides of the electrode assembly 14, respectively. A positive electrode lead 19 extends upward through a through hole of the insulating plate 17, and is welded to the lower face of a filter 22, which is a bottom plate of the sealing assembly 16. In the secondary battery 10, a cap 26, which is a top plate of the sealing assembly 16 electrically connected to the filter 22, becomes a positive electrode terminal. On the other hand, a negative electrode lead 20 extends through a through hole of the insulating plate 18 toward the bottom side of the exterior 15, and is welded to a bottom inner face of the exterior 15. In the secondary battery 10, the exterior 15 becomes a negative electrode terminal. When the negative electrode lead 20 is provided on the end, the negative electrode lead 20 extends through an outside of the insulating plate 18 toward the bottom side of the exterior 15, and welded with a bottom inner surface of the exterior 15.

The exterior 15 is, for example, a bottomed cylindrical metallic exterior housing can. A gasket 27 is provided between the exterior 15 and the sealing assembly 16 to achieve sealability inside the secondary battery 10. The exterior 15 has a grooved portion 21 formed by, for example, pressing the side wall thereof from the outside to support the sealing assembly 16. The grooved portion 21 is preferably formed in a circular shape along a circumferential direction of the exterior 15, and supports the sealing assembly 16 with the gasket 27 interposed therebetween and with the upper face of the grooved portion 21.

The sealing assembly 16 has the filter 22, a lower vent member 23, an insulating member 24, an upper vent member 25, and the cap 26 that are stacked in this order from the electrode assembly 14 side. Each member constituting the sealing assembly 16 has, for example, a disk shape or a ring shape, and each member except for the insulating member 24 is electrically connected to each other. The lower vent member 23 and the upper vent member 25 are connected to each other at each of middle portions thereof, and the insulating member 24 is interposed between circumferences thereof. If the internal pressure of the battery increases due to abnormal heat generation, for example, the lower vent member 23 breaks and thereby the upper vent member 25 expands toward the cap 26 side to be separated from the lower vent member 23, resulting in cutting off of an electrical connection between both members. If the internal pressure further increases, the upper vent member 25 breaks, and gas is discharged through an opening 26a of the cap 26.

Hereinafter, the electrode 30 (the positive electrode 11 and the negative electrode 12), the separator 13, and the non-aqueous electrolyte, which constitute the electrode assembly 14, will be described in detail.

### [Electrode]

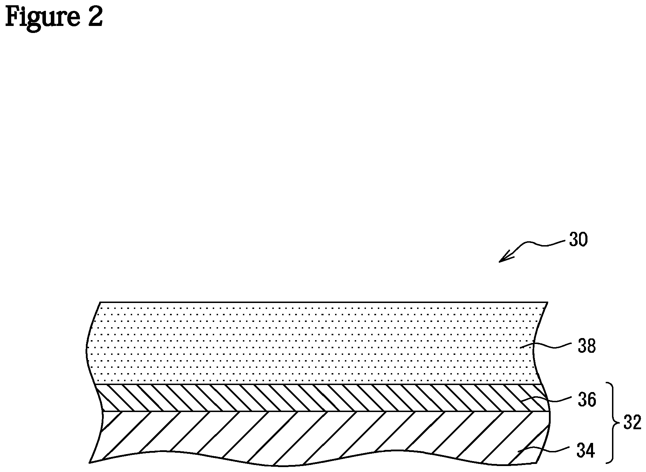

First, an electrode 30 will be described with reference to FIG. 2. FIG. 2 is an enlarged view of a part of a cross section of an electrode of an example of an embodiment. The electrode 30 has a current collector 32 and a mixture layer 38 formed on a surface of the current collector 32. The mixture layer 38 may be formed on only one surface of the current collector 32, but preferably formed on both surfaces of the current collector 32.

The electrode 30 may be any of a positive electrode 11 and a negative electrode 12. That is, only the positive electrode 11 may have the constitution of the electrode 30, only the negative electrode 12 may have the constitution of the electrode 30, or both of the positive electrode 11 and the negative electrode 12 may have the constitution of the electrode 30.

The current collector 32 has a base 34 and an electron conductive layer 36. For the base 34, a metal foil, a film in which a metal layer is formed on a surface, or the like may be used. In a case of the positive electrode 11, a metal foil containing aluminum as a main component may be used for the base 34. In a case of the negative electrode 12, a metal foil containing copper as a main component may be used for the base 34. The main component herein means a constituent having the highest mass proportion. The base 34 may be aluminum foil with substantially 100% aluminum, or may be copper foil with substantially 100% copper. The current collector 32 may not have the base and may be constituted with only the electron conductive layer 36. When the current collector 32 has the base, a thickness of the base 34 is, for example, greater than or equal to 5 µm and less than or equal to 20 µm.

The current collector 32 has the electron conductive layer 36 on a surface contacting with the mixture layer 38. When the mixture layers 38 are formed on both the surfaces of the current collector 32, the current collector 32 has the electron conductive layer 36 on at least any one of the surfaces of the current collector 32. The electron conductive layer 36 has pores, and an electrolyte liquid is present inside the electron conductive layer 36. This conducts electrons and promotes circulation of the electrolyte liquid to improve the discharge characteristics.

The electron conductive layer 36 is a wire net, for example. The network fineness of the wire net is not particularly limited as long as it may circulate the electrolyte liquid, and for example, greater than or equal to 80 mesh and less than or equal to 200 mesh. Herein, the term mesh refers to a number of apertures in one inch (25.4 mm). A thickness of lines forming the network is, for example, greater than or equal to 20 µm and less than or equal to 90 µm. A thickness of the wire net is, for example, greater than or equal to 40 µm and less than or equal to 180 µm.

A material of the wire net is not particularly limited as long as it is durable against the electrolyte liquid, and is platinum (Pt) or stainless steel, for example. The stainless steel is preferably SUS 316 from the viewpoint of the durability.

The electron conductive layer 36 may be a stacked body of a plurality of the wire nets. This may regulate the mesh.

The electron conductive layer 36 is a metal fiber sheet, for example. A thickness of the metal fiber sheet is, for example, greater than or equal to 10 µm and less than or equal to 200 µm, and a porosity of the metal fiber sheet is, for example, greater than or equal to 50%. The porosity of the metal fiber sheet may be less than or equal to 95%. The porosity of the metal fiber sheet may be calculated based on apparent volume and weight of the metal fiber sheet and a true density of the metal fiber, for example.

A material of the metal fiber sheet is not particularly limited as long as it is durable against the electrolyte liquid, and is stainless steel, for example. The stainless steel is preferably SUS 316 from the viewpoint of the durability.

The electron conductive layer 36 may be projections formed on a surface of the current collector 32 contacting with the mixture layer 38. That is, the projections formed on the surface of the base 34 may constitute the electron conductive layer 36. The projections are preferably disposed on the surface of the base 34 evenly in longitudinal and transverse directions. Pitches of the projections in the longitudinal and transverse directions are not particularly limited, and for example, greater than or equal to 1 mm and less than or equal to 10 mm. A width of the projections is, for example, greater than or equal to 50 µm and less than or equal to 150 µm, and a height of the projections is, for example, greater than or equal to 20 µm and less than or equal to 200 µm.

The mixture layer 38 includes an active material. A thickness of the mixture layer 38 is preferably greater than or equal to 50 µm and less than or equal to 250 µm, more preferably greater than or equal to 80 µm and less than or equal to 220 µm, and particularly preferably greater than or equal to 100 µm and less than or equal to 200 µm from the viewpoint of higher capacity. A larger thickness of the mixture layer 38 yields a more remarkable effect of the present embodiment. The mixture layer 38 may include a conductive agent and a binder in addition to the active material.

For the active material for the positive electrode (positive electrode active material), a lithium-transition metal composite oxide is typically used. Examples of a metal element contained in the lithium-transition metal composite oxide include Ni, Co, Mn, Al, B, Mg, Ti, V, Cr, Fe, Cu, Zn, Ga, Sr, Zr, Nb, In, Sn, Ta, and W. Among them, at least one of Ni, Co, and Mn is preferably contained. For the active material for the negative electrode (negative electrode active material), a carbon-based active material such as: a natural graphite such as flake graphite, massive graphite, and amorphous graphite; and an artificial graphite such as massive artificial graphite (MAG) and graphitized mesophase-carbon microbead (MCMB) is used, for example. For the negative electrode active material, a Si-based active material, or the like that forms an alloy with lithium may be used. The active material is a main component in the mixture layer 38, and a content rate of the active material in the mixture layer 38 is preferably greater than or equal to 85 mass% and less than or equal to 99 mass%, and more preferably greater than or equal to 90 mass% and less than or equal to 99 mass%.

The positive electrode active material is composed of, for example, secondary particles formed by aggregation of a plurality of primary particles. A particle diameter of the primary particles constituting the secondary particles is, for example, greater than or equal to 0.05 µm and less than or equal to 1 µm. The particle diameter of the primary particle is measured as a diameter of a circumscribed circle in a particle image observed with a scanning electron microscope (SEM). The secondary particles of the positive electrode active material are particles having a median diameter (D50) on a volumetric basis of, for example, greater than or equal to 3 µm and less than or equal to 30 µm, preferably greater than or equal to 5 µm and less than or equal to 25 µm, and particularly preferably greater than or equal to 7 µm and less than or equal to 15 µm. The D50 means a particle diameter at which a cumulative frequency is 50% from a smaller particle diameter side in a particle size distribution on a volumetric basis. The particle size distribution of the positive electrode active material may be measured by using a laser diffraction-type particle size distribution measuring device (for example, MT3000II, manufactured by MicrotracBEL Corp.) with water as a dispersion medium.

Examples of the conductive agent included in the mixture layer 38 include carbon materials such as carbon black (CB), acetylene black (AB), Ketjenblack, carbon nanotube (CNT), and graphite. These may be used singly, or in combination of two or more.

Examples of the binder included in the mixture layer 38 may include fluororesins such as polytetrafluoroethylene (PTFE) and polyvinylidene fluoride (PVdF), polyacrylonitrile (PAN), polyimide resins, acrylic resins, and polyolefin resins. These may be used singly, or in combination of two or more. Cellulose derivatives such as carboxymethylcellulose (CMC) or a salt thereof, polyethylene oxide (PEO), and the like may be used in combination with these resins.

A method for manufacturing the electrode 30 includes, for example, a step of mounting a clay-like mixture lump including the active material on the electron conductive layer 36 and rolling the lump to produce the electrode. The mixture lump may be produced by kneading the active material with the conductive agent, the binder, and the like.

Another method for manufacturing the electrode 30 includes: a mixture-layer producing step of dry-mixing raw materials including the active material, and rolling the raw materials to produce a sheet of the mixture layer 38; and a laminating step of laminating the mixture layer 38 to the electron conductive layer 36 to produce the electrode 30, for example. The raw materials preferably includes a fibrous binder. The fibrous binder is, for example, fibrillated polytetrafluoroethylene (PTFE). The fibrous binder is a dry powder, and not a powder dispersed in a dispersion such as water. This may produce the mixture layer 38 with a dry process including the dry-mixing. Here, the dry process is a process in which a solvent is not used in mixing the active material, the binder, the conductive agent, and the like, and that is, mixing the active material, the binder, the conductive agent, and the like in a state where the solid-content concentration is substantially 100%. The mixture layer 38 may include a binder that is not fibrillated, such as polyvinylidene fluoride (PVdF), in addition to the fibrous binder.

In the mixture-layer producing step, the active material and the fibrous binder are mixed to produce mixture particles having a solid-content concentration of substantially 100%, and then the mixture particles are rolled for forming a sheet to produce the mixture layer 38. In the laminating step, the mixture layer 38 is laminated to the electron conductive layer 36 to produce the electrode 30. In the laminating step, the current collector 32 and the mixture layer 38 are passed between two rollers in a state where the electron conductive layer 36 and the mixture layer 38 are opposite to each other, and a linear pressure is applied to produce the electrode 30, for example.

### [Separator]

For the separator 13, a porous sheet having an ion permeation property and an insulation property is used. Specific examples of the porous sheet include a fine porous thin film, a woven fabric, and a nonwoven fabric. As a material for the separator 13, a polyolefin such as polyethylene or polypropylene, cellulose, or the like is preferable. The separator 13 may have any of a single-layered structure and a multi-layered structure. On a surface of the separator 13, a resin layer having high heat resistance, such as an aramid resin, and a filler layer including a filler of an inorganic compound may be provided.

### [Non-Aqueous Electrolyte]

The non-aqueous electrolyte (electrolyte liquid) includes a non-aqueous solvent and an electrolyte salt dissolved in the non-aqueous solvent. For the non-aqueous solvent, any of esters, ethers, nitriles such as acetonitrile, and amides such as dimethylformamide, a mixed solvent of two or more thereof, or the like may be used, for example. The non-aqueous solvents may contain a halogen-substituted derivative in which the hydrogen atoms of these solvents are at least partially replaced with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as γ-butyrolactone (GBL) and γ-valerolactone (GVL); and chain carboxylates such as methyl acetate, ethyl acetate, propyl acetate, methyl propionate (MP), and ethyl propionate.

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 < x < 6, and n represents 1 or 2), LiB₁₀Cl₁₀, LiCl, LiBr, LiI, lithium chloroborane, a lithium lower aliphatic carboxylate, borate salts such as Li₂B₄O₇ and Li(B(C₂O₄)F₂), and imide salts such as LiN(SO₂CF₃)₂ and LiN(C₁F₂₁+₁SO₂)(CₘF₂ₘ₊₁SO₂) {1 and m represent integers of 0 or more}. These lithium salts may be used singly, or as a mixture thereof. Among them, LiPF₆ is preferably used from the viewpoints of ion conductivity, electrochemical stability, and the like. A concentration of the lithium salt is preferably, for example, greater than or equal to 0.8 mol and less than or equal to 1.8 mol per litter of the non-aqueous solvent.

### EXAMPLES

Hereinafter, the present disclosure will be further described with Examples, but the present disclosure is not limited to these Examples.

### <Example 1>

### [Production of Positive Electrode Current Collector]

A Pt net functioning as a base and an electron conductive layer was prepared for use as a positive electrode current collector. The network fineness of the Pt net was 80 mesh, and a thickness of the Pt net was 170 µm.

### [Production of Positive Electrode Mixture Layer]

Positive electrode active material particles composed of LiNi_{0.5}Co_{0.2}Mn_{0.3}O₂, carbon black (CB), and polytetrafluoroethylene (PTFE) were fed into a mixer at a mass ratio of 98:1:1, and a mixing treatment was performed to produce positive electrode mixture particles. Thereafter, the produced positive electrode mixture particles were passed between two rollers and rolled to produce a positive electrode mixture layer with 100 µm in thickness.

### [Production of Positive Electrode]

In a state where the positive electrode mixture layer was disposed on the positive electrode current collector, the positive electrode current collector and the positive electrode mixture layer were pressed by using two rollers, and then cut to a predetermined electrode size to obtain a positive electrode.

### [Production of Negative Electrode]

Lithium foil was cut to a predetermined electrode size to obtain a negative electrode.

### [Electrolyte Liquid]

Ethylene carbonate (EC), dimethyl carbonate (DMC), and ethyl methyl carbonate (EMC) were mixed at a volume ratio of 20:75:5 to obtain a non-aqueous solvent. Into this non-aqueous solvent, LiPF₆ was dissolved at a concentration of 1.3 mol/L to obtain an electrolyte liquid.

### [Test Cell]

An electrode assembly in which the positive electrode and the negative electrode were disposed opposite to each other with a polypropylene separator interposed therebetween, the electrolyte liquid were housed in a cup-shaped battery case, and the battery case was sealed with a sealing plate via a gasket provided on an opening of the battery case to produce a test cell.

### <Example 2>

A test cell was produced in the same manner as in Example 1 except that, in the positive electrode current collector, two Pt nets were laminated to produce a positive electrode current collector.

### <Example 3>

A test cell was produced in the same manner as in Example 1 except that, in the positive electrode current collector, three Pt nets were laminated to produce a positive electrode current collector.

### <Example 4>

A test cell was produced in the same manner as in Example 1 except that, in the positive electrode current collector, a SUS net (material: SUS 316) was used as the positive electrode current collector. The network fineness of the SUS net was 150 mesh, and a thickness of the SUS net was 110 µm.

### <Example 5>

A test cell was produced in the same manner as in Example 4 except that, in the positive electrode current collector, the network fineness of a SUS net to be used was changed to 200 mesh.

### <Example 6>

A test cell was produced in the same manner as in Example 4 except that, in the positive electrode current collector, the network fineness of a SUS net to be used was changed to 300 mesh.

### <Example 7>

A test cell was produced in the same manner as in Example 4 except that, in the positive electrode current collector, the network fineness of a SUS net to be used was changed to 400 mesh.

### <Example 8>

A test cell was produced in the same manner as in Example 4 except that, in the positive electrode current collector, the network fineness of a SUS net to be used was changed to 635 mesh.

### <Example 9>

A test cell was produced in the same manner as in Example 1 except that a laminate in which a SUS fiber sheet (material: SUS 316) was laminated to one surface of Al foil was used as the positive electrode current collector. A thickness of the SUS fiber was 20 µm, and a porosity of the SUS fiber was 63%.

### <Example 10>

A test cell was produced in the same manner as in Example 9 except that, in the positive electrode current collector, the thickness of a SUS fiber sheet to be used was changed to 100 µm, and the porosity was changed to 89%.

### <Example 11>

A test cell was produced in the same manner as in Example 1 except that SUS 316 foil in which projections as an electron conductive layer were formed in a stripe shape on a base was used as the positive electrode current collector. A height of the projections was 30 µm, a pitch of the stripe was 5 mm, and a thickness of the base was 30 µm.

### <Comparative Example>

A test cell was produced in the same manner as in Example 1 except that a SUS 316 plate with a flat plate shape was used as the positive electrode current collector.

### [Evaluation of Discharge Characteristics]

Under a temperature environment of 25°C, each of the test cells of Examples and Comparative Example was charged at a constant current of 0.05 C until a battery voltage reached 4.5 V. Thereafter, the test cell was discharged at a constant current of 0.7 C until the battery voltage reached 2.5 V.

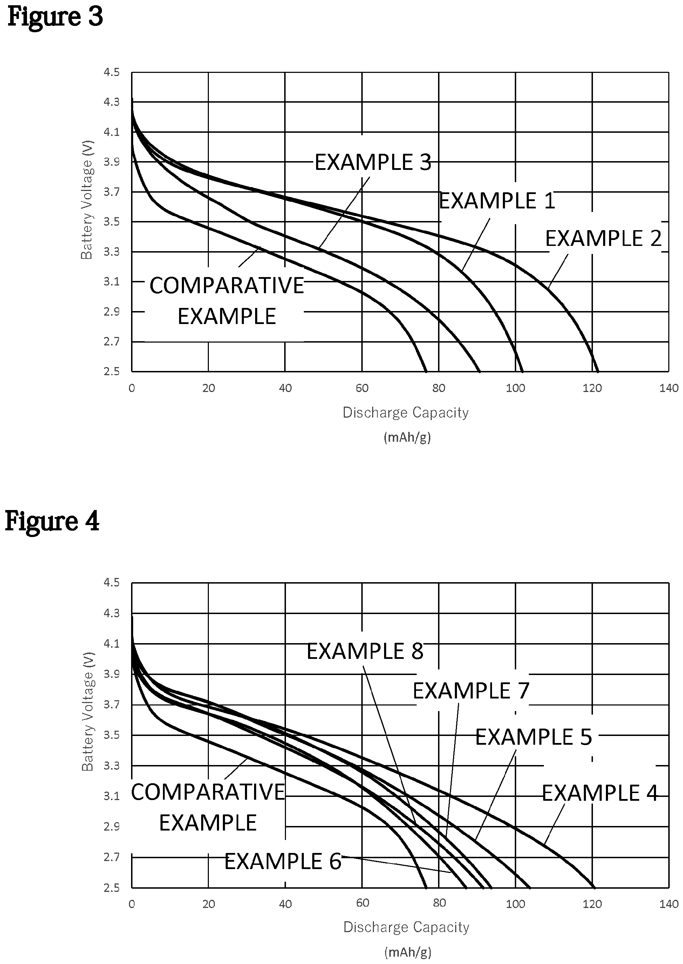

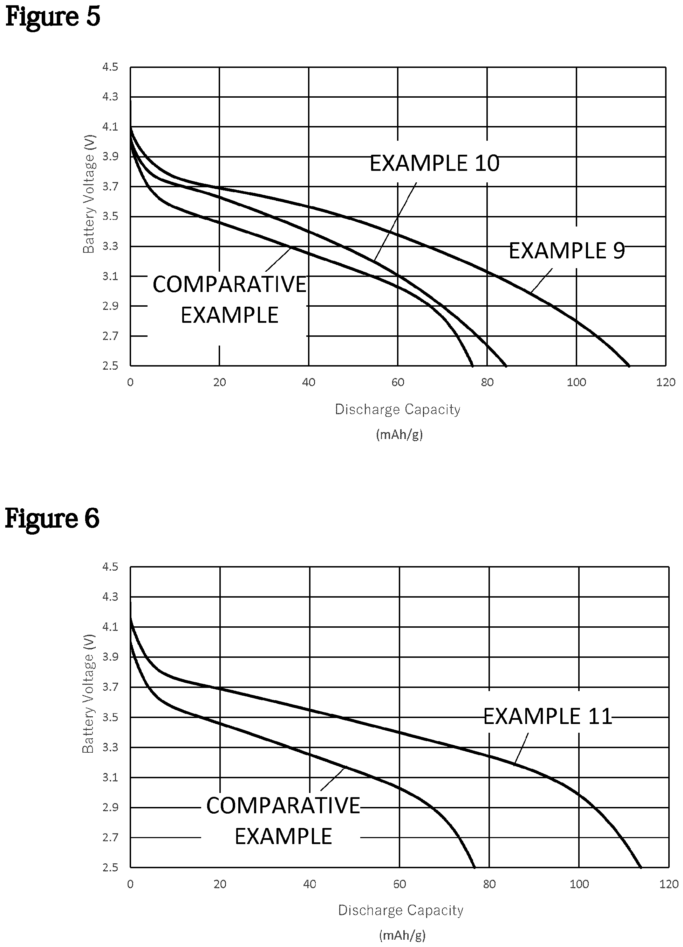

The evaluation results of the discharge characteristics of each of the test cells of Examples and Comparative Example are separately shown in FIG. 3 to FIG. 6. FIG. 3 shows the results of the current collectors using the Pt net. FIG. 4 shows the results of the current collectors using the SUS net. FIG. 5 shows the results of the current collectors using the SUS fiber sheet. FIG. 6 shows the results of the current collectors having the projections. All of FIG. 3 to FIG. 6 show the data of Comparative Example for comparison.

As found from FIG. 3 to FIG. 6, Examples 1 to 11 all improve the discharge capacity and increase the voltage value compared with Comparative Example, and it may be confirmed that the electron conductive layer improves the discharge characteristics.

### REFERENCE SIGNS LIST

10 secondary battery, 11 positive electrode, 12 negative electrode, 13 separator, 14 electrode assembly, 15 exterior, 16 sealing assembly, 17, 18 insulating plate, 19 positive electrode lead, 20 negative electrode lead, 21 grooved portion, 22 filter, 23 lower vent member, 24 insulating member, 25 upper vent member, 26 cap, 26a opening, 27 gasket, 30 electrode, 32 current collector, 34 base, 36 electron conductive layer, 38 mixture layer

## Claims

1. A non-aqueous electrolyte secondary battery, comprising an electrode having:
a current collector; and
a mixture layer formed on a surface of the current collector and including an active material, wherein
the current collector has an electron conductive layer that has pores on a surface contacting with the mixture layer, and
an electrolyte liquid is present inside the electron conductive layer.

2. The non-aqueous electrolyte secondary battery according to claim 1, wherein the electron conductive layer is a wire net.

3. The non-aqueous electrolyte secondary battery according to claim 2, wherein the wire net has a network fineness greater than or equal to 80 mesh and less than or equal to 200 mesh.

4. The non-aqueous electrolyte secondary battery according to claim 1, wherein the electron conductive layer is a metal fiber sheet.

5. The non-aqueous electrolyte secondary battery according to claim 4, wherein a thickness of the metal fiber sheet is greater than or equal to 10 µm and less than or equal to 200 µm, and a porosity of the metal fiber sheet is greater than or equal to 50%.

6. The non-aqueous electrolyte secondary battery according to claim 1, wherein the electron conductive layer is projections formed on a surface of the current collector, the surface contacting with the mixture layer.

7. A method for manufacturing the non-aqueous electrolyte secondary battery according to any one of claims 1 to 6, including a step of mounting a clay-like mixture lump including the active material on the electron conductive layer and rolling the lump to produce the electrode.

8. A method for manufacturing the non-aqueous electrolyte secondary battery according to any one of claims 1 to 6, including:
a step of dry-mixing raw materials including the active material, and rolling the raw materials to produce a sheet of the mixture layer; and
a step of laminating the mixture layer to the electron conductive layer to produce the electrode.
